# EUROPEAN PATENT APPLICATION

(11) **EP 4 186 851 A1**
(43) Date of publication of application: **31.05.2023**
(21) Application number: 21210944.1
(22) Date of filing: 29.11.2021
(51) Int. Cl.: B67B 3/00

(54) **ROBOTIC ARM FOR MANIPULATING A CAPPING HEAD, ROBOT COMPRISING THE ROBOTIC ARM, AND PACKAGING APPARATUS COMPRISING THE ROBOT**

(71) Applicant: Sidel Participations, 76930 Octeville Sur Mer (FR)
(72) Inventor: BORGESE, Rossana, 43126 Parma (IT); CENCI, Mattia, 43126 Parma (IT); TASORA, Alessandro, 43126 Parma (IT); FUSAI, Dario, 43126 Parma (IT)
(74) Representative: Sidel Group

(57) **Abstract**

There is described a robotic arm (25) for manipulating a capping head (17), in particular within an aseptic environment (4). The robotic arm (25) comprises an end effector (27), which in turn comprises a support base (29), a fork element (30) carried by and protruding from the support base (29), a clamping element (31), in particular located below the support base (29); and a restrain tooth (32) supported by the support base (29) and being arranged between the fork element (30) and the clamping element (31). Operation of the robotic arm (25) allows to dismount and/or mount the capping head (17) from and to a capping machine (9).

## Description

### TECHNICAL FIELD

The present invention relates to a robotic arm, in particular a robotic arm configured to operate within a sterile and/or aseptic environment, even more particular within a sterile and/or aseptic environment of a packaging apparatus for the packaging of pourable products. Advantageously, the robotic arm is configured to manipulate a capping head of a capping machine.

Advantageously, the present invention further relates to a robot, in particular to a robot for operating within an aseptic environment, even more particular to a robot for operating within an aseptic environment of a packaging apparatus for the packaging of pourable products.

Advantageously, the present invention also relates to a packaging apparatus for the packaging of a pourable product having a robot.

### BACKGROUND ART

Automatic packaging apparatuses for the packaging of pourable food products, e.g. for the packaging of pourable food products into containers such as bottles, cans or the like, are known.

Some packaging apparatuses are known to comprise an aseptic environment so as to package the pourable food products within the aseptic environment. These kind of apparatuses comprise an isolation chamber, which delimits and/or contains an inner environment to be kept, in use, under aseptic conditions.

Typically the known packaging apparatuses also comprise treatment machines such as filling machines, capping machines, blow molding machines or similar, arranged within the aseptic environment.

The capping machines are known to apply caps onto the containers. Capping machines typically comprises plurality of capping units, e.g. mounted to a conveying carousel, configured to apply the caps onto the containers.

A typical capping unit comprises a capping head for selectively retaining a respective cap prior to applying and fastening the cap onto a respective container.

As is known there are different types, e.g. screw caps or sports caps, and formats, e.g. having different shapes, sizes and the like, of caps.

Each capping head is adapted to handle one or only a limited number of varying types and/or formats of caps.

It is furthermore known that operation of a packaging apparatus may require to package the pourable food product into containers of a new type and/or format after having packaged the pourable food product into containers of a first type and/or format. This often comes along with the need to handle also a new type and/or format of caps.

Therefore, it can become necessary that a technical operator needs to dismount the capping heads of a first type and to mount capping heads of a second type.

Additionally, it may happen that during operation of the packaging apparatus, a capping head may have a malfunction, which means that this capping head needs to be dismounted by a technical operator so as to mount a new capping head.

A drawback is seen that when one needs to dismount one or more of the capping heads and one needs to mount one or more new capping heads one needs to enter the aseptic environment losing thereby sterility. Therefore, after termination of the dismounting and mounting operations of the technical operator it becomes necessary to execute a sterilization cycle.

Thus, a desire is felt in the sector to provide means so as to overcome the aforementioned drawbacks.

A further desire is felt in the sector to provide for improved packaging apparatuses for the packaging of pourable products.

### DISCAP OF INVENTION

It is therefore an object of the present invention to provide means to overcome, in a straightforward and low-cost manner, the aforementioned drawbacks.

Advantageously, it is therefore an object of the present invention to provide a packaging apparatus to overcome, in a straightforward and low-cost manner, the aforementioned drawbacks.

According to the present invention, there is provided a robotic arm as claimed in claim 1.

Preferred non-limiting embodiments are claimed in the claims being directly or indirectly dependent on claim 1.

According to the present invention, there is also provided a robot according to claim 6.

According to the present invention, there is provided a packaging apparatus according to any one of claims 7 to 16.

### BRIEF DESCRIPTION OF THE DRAWINGS

A non-limiting embodiment of the present invention will be described by way of example with reference to the accompanying drawings, in which:
Figure 1 is a schematic top view of a packaging apparatus having a robot according to the present invention, with parts removed for clarity;
Figure 2 is a schematic view of the robot of Figure 1 and being coupled to means for moving the robot, with parts removed for clarity;
Figure 3 is a perspective view of a portion the robot of Figure 1, with parts removed for clarity;
Figures 4a to 4d are perspective views of the portion of the robot of Figure 3 during varying steps of interacting with a further portion of the packaging apparatus of Figure 1, with parts removed for clarity;
Figure 5

### BEST MODES FOR CARRYING OUT THE INVENTION

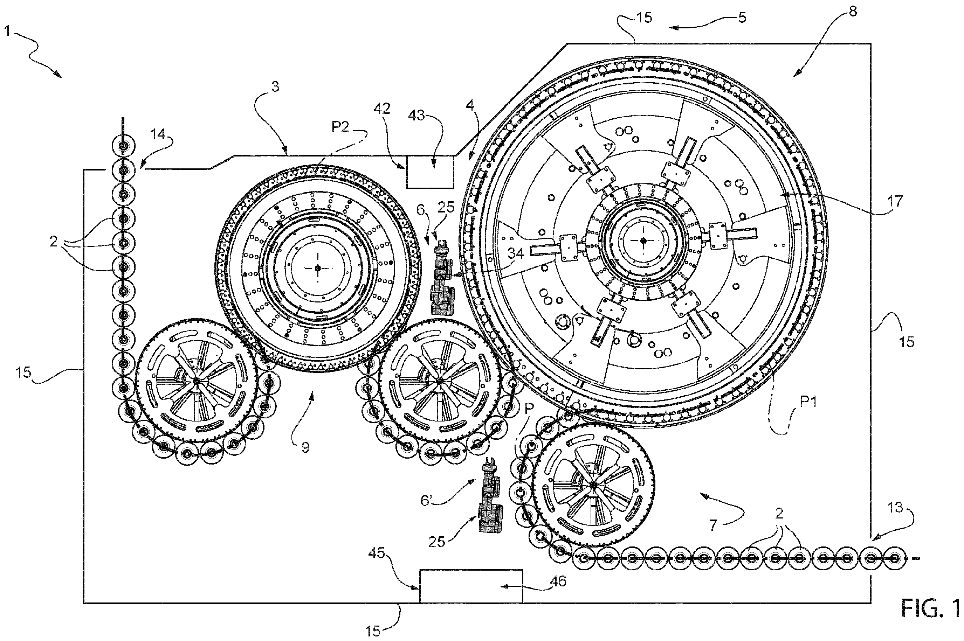

Number 1 in Figure 1 indicates as a whole a packaging apparatus for the packaging of pourable products, in particular pourable food products.

Packaging apparatus 1 may be an automatic packaging apparatus configured to package the pourable product, in particular the pourable food product, into containers 2, such as bottles, jars, vessels, or the like, in particular being made of base components like glass, paper or cardboard, plastics, aluminum, steel, and composites.

The pourable products may be pourable food products such as carbonated liquids (e.g. sparkling water, soft drinks and beer), non-carbonated liquids (including still water, juices, teas, sport drinks, wine, milk, etc.), emulsions and beverages containing pulps.

Each container 2 may comprise a main body holding the pourable product and a cap for closing the main body.

The cap may be of different type, e.g. crown corks, screw caps, sports caps, stoppers or similar (and being produced from a variety of materials such as plastics and metal) and/or of different format, e.g. differing in size, shape or the like.

Packaging apparatus 1 may comprise:
- an isolation housing 3 separating an aseptic environment 4 from an outer and/or non-aseptic environment 5;
- at least one treatment machine, in particular a plurality of treatment machines, arranged within aseptic environment 4; and
- a robot 6 placed within aseptic environment 4.

In more detail, each treatment machine may be configured to execute at least one treatment step. In particular, each treatment step may contribute (in one way or another) to the packaging of the pourable product.

E.g. one treatment machine may be a conveying machine 7 configured to advance (a succession of) containers 2 along an advancement path P within aseptic environment 4 and/or isolation housing 3.

Alternatively or in addition, a treatment machine may be a filling machine 8 at least partially arranged within aseptic environment 4 and configured to fill containers 2 with the pourable product during their advancement along at least a filling portion P1 of advancement path P.

Preferentially, a treatment machine may be a capping machine 9 at least partially arranged within aseptic environment 4 and configured to cap containers 2 during their advancement along at least a capping portion P2 of advancement path P, in particular capping portion P2 being arranged downstream of filling portion P1 along advancement path P.

According to the specific embodiment shown in Figure 1, apparatus 1 may comprise conveying machine 7, filling machine 8 and capping machine 9, in particular filling machine 8 being arranged upstream of capping machine 9.

In addition or alternatively, packaging apparatus 1 may comprise a treatment machine being configured to fill containers 2 with the pourable product and apply caps on containers 2; in other words, such a treatment machine acts both as a filling machine 8 and a capping machine 9.

In addition or alternatively, apparatus 1 may comprise a treatment machine being a blow molding machine for forming containers 2 from preforms. In addition, the blow molding machine may also be configured to fill containers 2 with the pourable product after their formation.

In more detail, isolation housing 3 may comprise an inlet 13 and an outlet 14 configured to allow for respectively feeding and discharging containers 2 to and from aseptic environment 4.

Furthermore, isolation housing 3 may comprise a plurality of walls 15 (only some shown) delimiting aseptic environment 4, in particular delimiting aseptic environment 4 from six faces, and carrying inlet 13 and outlet 14.

According to some possible non-shown embodiments, inlet 13 may be configured to allow for the feeding of preforms into aseptic environment 4 and outlet 14 may be configured to allow for discharging containers 2 from aseptic environment 4.

Apparatus 1 may comprise a conditioning unit configured to control an ambient condition, such as temperature and/or humidity and/or sterility and/or cleanliness and/or an airflow (direction), within aseptic environment 4.

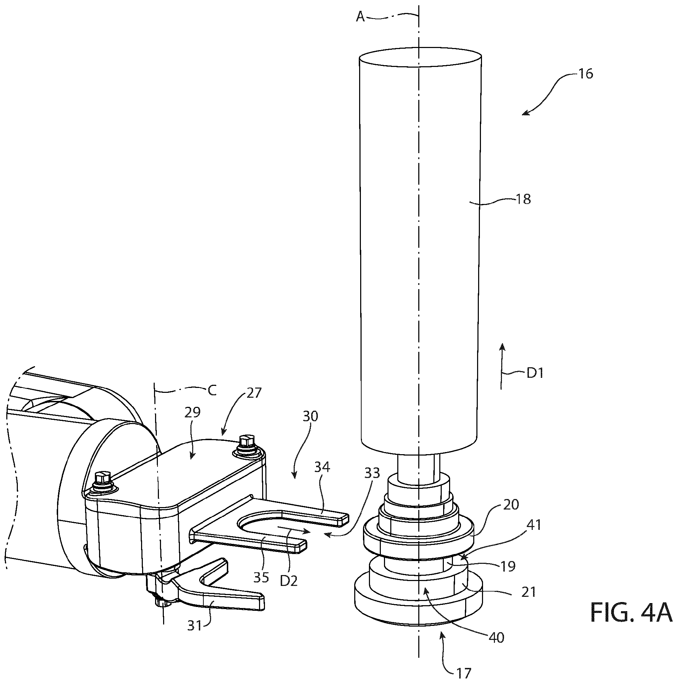

In more detail, capping machine 9 may comprise a plurality of capping units 16 (see Figures 4a to 4d), each one configured to apply and fasten at least one respective cap (at a time) onto a respective container during advancement of the respective container along capping portion P2.

In particular, each capping unit 16 may be mounted onto a conveying unit of conveying machine 7 and/or of the capping machine, e.g. a conveying carousel, such that, in use, each capping unit 16 advances together and/or simultaneously with the respective container 2.

In even more detail, each capping unit 16 comprises a capping head 17 (see Figures 4a to 4d) configured to retain, apply and fasten at least one respective cap at a time onto the respective container 2.

Additionally, each capping unit 16 may also comprise a base 18, in particular mounted to the conveying unit, and configured to releasably and/or releasably carrying the respective capping head 17.

Preferentially, each base 18 may comprise actuation means operatively coupled to the respective capping head 17 so as to control operation of the respective capping head 17.

Moreover, each capping unit 16 may also comprise at least one retaining element so as to retain the respective container during advancement along capping portion P2.

In particular, each capping head 17 is controllable into a locking configuration in which capping head 17 is releasably connected to the respective base 18 and a releasing configuration in which capping head 17 can be mounted and/or dismounted for allowing to dismount and/or mount the capping head 17, in particular from and to the respective base 18.

Even more particularly, each capping head 17 can be removed from the respective base 18 so that a new capping head 17 can be releasably coupled to the respective base 18.

The exchange of one capping head 17 with a new capping head 17 can be the reason of a malfunction of the capping head 17 currently mounted and/or in use or needed due to a format change.

It should be considered that each capping head 17 may be adapted to operate with one type and/or format of cap or with a limited number of types and/or formats. Therefore, when exchanging a capping head 17 as a reason of a malfunction the capping head 17 in use should be exchanged with a capping head 17 which is adapted to operate with the same type and/or format of cap.

In the case of a format change, each capping head 17 in use is of a first type, in particular configured to operate with a first type and/or format of cap, and each new capping head 17 is of a second type, in particular configured to operate with a second type and/or format of cap.

With particular reference to Figures 4a to 4d, each capping head 17 may comprise a tubular body 19, a first annular portion 20, in particular a first ring, and a second annular portion 21, in particular a second ring.

In particular, each tubular body 19 may extend along a central axis A.

Preferentially, each first annular portion 20 and each second annular portion 21 may be coaxially arranged with respect to the respective tubular body 19 and/or the respective central axis A.

According to some preferred embodiments, each first annular portion 20 may be slidable along, and in particular also around, the respective tubular body 20 and/or the respective central axis E.

In particular, each first annular portion 20 may surround at least a portion of the respective tubular body 19.

According to some preferred non-limiting embodiments, each second annular portion 21 may be axially displaced, in particular with respect to central axis A, from the respective first annular portion 20.

In particular, each capping head 17 when being releasably coupled to the respective base 18 presents a substantial horizontal orientation; i.e. the respective central axis A has a substantial horizontal orientation.

Furthermore, with the respective capping head 17 being releasably coupled to the respective base 18, the respective first annular portion 20 defines an upper portion and the respective second annular portion 21 defines a lower portion. In other words, each first annular portion 20 is arranged above the respective second annular portion 21.

Moreover, each second annular portion 21 may be, in use, axially closer to the respective container 2 than the respective first annular portion 20.

Preferentially, each first annular portion 20 may be axially moveable away and/or towards the respective second annular portion 21.

According to some preferred non-limiting embodiments, each first annular portion 20 is moveable, in particular into an unlocking position, for controlling the respective capping head 17 into the respective releasing configuration. In particular, each first annular portion 20 is configured to axially move away from the respective second annular portion 21 for being moved into the unlock position and/or for controlling the respective capping head 17 into the respective releasing configuration.

With particular reference to Figures 4a to 4d, each second annular portion 20 may be radially wider than the respective tubular body 19; i.e. an outermost radially extension of second annular portion 20 is larger than an outermost radially extension of the respective tubular body 19. Also each first annular portion 21 may be radially wider than the tubular body 17.

According to some preferred non-limiting embodiments, each second annular portion 21 may be configured to selectively grip and retain one respective cap. In other words, each second annular portion 21 may act as and/or define a gripping device of the respective capping head 17.

According to some possible non-limiting embodiments, each capping head 17 or at least some portions of each capping head 17 may be rotatable about the respective central axis A so as to fasten the respective cap onto the respective container.

With particular reference to Figures 1 to 4d, robot 6 may comprise at least one robotic arm 25, in particular configured to move within aseptic environment 4.

More specifically, robot 6 may also comprise a base platform 26 carrying robotic arm 25, in particular robotic arm 25 being configured to execute a relative movement with respect to base platform 26.

Advantageously, robotic arm 25 comprises at least an end effector 27 configured to manipulate each capping head 17. In particular, end effector 27 is configured to manipulate each capping head 17 for dismounting and/or mounting capping head 17 to and/or from the respective base 18.

Moreover, each robotic arm 25 may comprise an actuation device 28 carrying end effector 27 and configured to move end effector 27, in particular within aseptic environment 4. In particular, actuation device 28 may be mounted onto base platform 26.

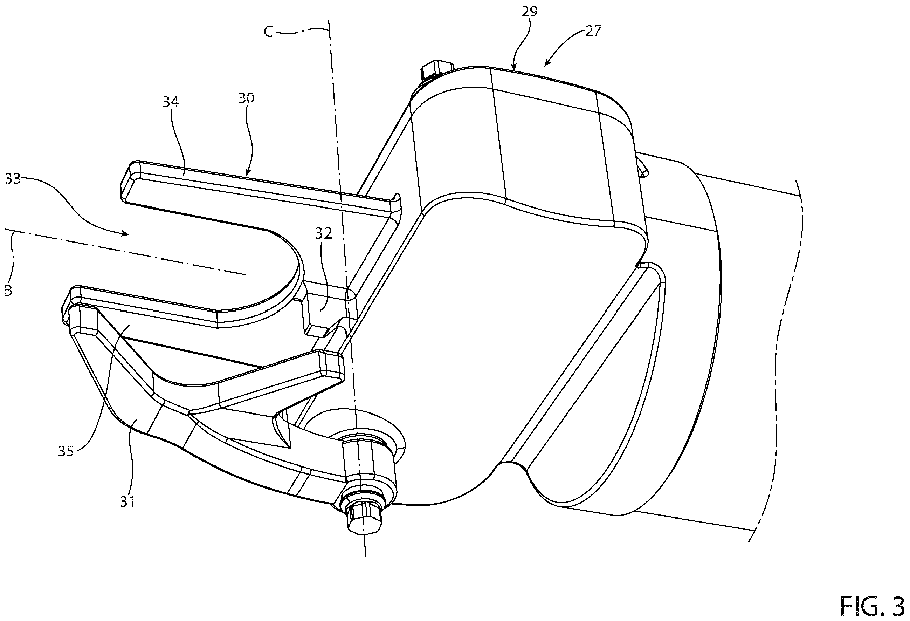

In more detail and with particular reference to Figure 3, end effector 27 comprises:
- a support base 29, in particular connected to actuation device 28;
- a fork element 30 carried by and protruding from support base 29;
- a clamping element 31, in particular moveably, even more particular rotatably, connected to support base 29; and
- a restrain tooth 32 supported by support 29, and in particular being located between fork element 30 and clamping element 31.

In the following, we make reference to end effector 27 when manipulating one of capping heads 17, in particular capping head 17 being releasably mounted to the respective base 18. However, the description also refers to the situation of consecutively manipulating varying capping heads 17, which may be mounted to the respective base 18 or which are to be mounted to a respective base 18.

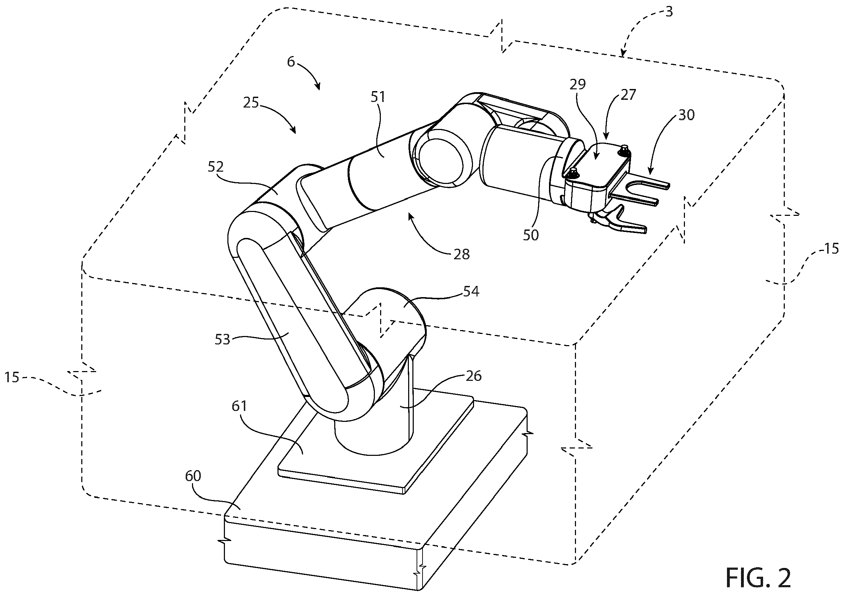

In more detail and with particular reference to Figures 2 to 4d, fork element 30 is configured to receive at least a portion of tubular body 19 such to be interposed between first annular portion 20 and second annular portion 21.

Additionally, fork element 30 is configured to interact with first annular portion 20 so as to axially move first annular portion 20 for controlling capping head 17 into the releasing configuration. In particular, fork element 30 is configured to axially move first annular portion 20 into the unlocking position.

More specifically, fork element 30 may be configured to axially move away from second annular portion 21 so as to control capping head 17 into the releasing configuration.

Moreover, restrain tooth 32 is configured to be fitted against a portion of capping head 17, in particular second annular portion 21, by mechanical contact.

Additionally, clamping element 31 is moveable, in particular angularly moveable, into a clamping position at which clamping element 31 is configured to clamp capping head 17 in collaboration with fork element 30 and/or restrain tooth 31.

Preferentially, fork element 30 may comprise a receiving space 33 for at least partially receiving tubular body 19.

In particular, fork element 30 may comprise a first finger 34 and a second finger 35 connected to and protruding away from support base 29. In particular, first finger 34 and second finger 35 delimit and/or define receiving space 33.

Preferentially, fork element 30, in particular first finger 34 and second finger 35, may be arranged in front of support base 29, in particular when manipulating a capping head 17. In this manner it may be possible to arrange end effector 27 such that fork element 30 is interposed between support base 29 and one capping head 17.

According to some preferred non-limiting embodiments, fork element 30, in particular first finger 34 and second finger 35, may extend along an axis B. Preferentially, fork element 30, in particular first finger 34 and second finger 35, and/or axis B may be transversal, in particular perpendicular, to support base 29.

In further detail, fork element 30, in particular first finger 34 and second finger 35, may be integral to support base 29.

Reverting again to Figures 4a to 4d, clamping element 31 may be rotatable around a rotation axis C. In particular, rotation axis C may be transversal, in particular perpendicular, to support base 29.

More specifically, rotation axis C may be transversal, in particular perpendicular, to axis B.

In further detail, clamping element 31 may be also moveable into a rest position at which clamping element 31 is configured to be detached from capping head 17.

More specifically, clamping element 31 may be angularly moveable around rotation axis C for controlling clamping element 31 between the clamping position and the rest position.

According to some preferred non-limiting embodiments, clamping element 31 may be arranged such that at least a portion of support base 29 may be interposed between clamping element 31 and fork element 30.

In further detail, clamping element 31 may be arranged below support base 29.

In more detail, restrain tooth 32 may protrude from support base 29, in particular into a direction parallel to central axis A.

According to some preferred non-limiting embodiments, robotic arm 25 may also comprise an actuator, in particular arranged within a housing space of support base 29, and configured to angularly move clamping element 31 around rotation axis C.

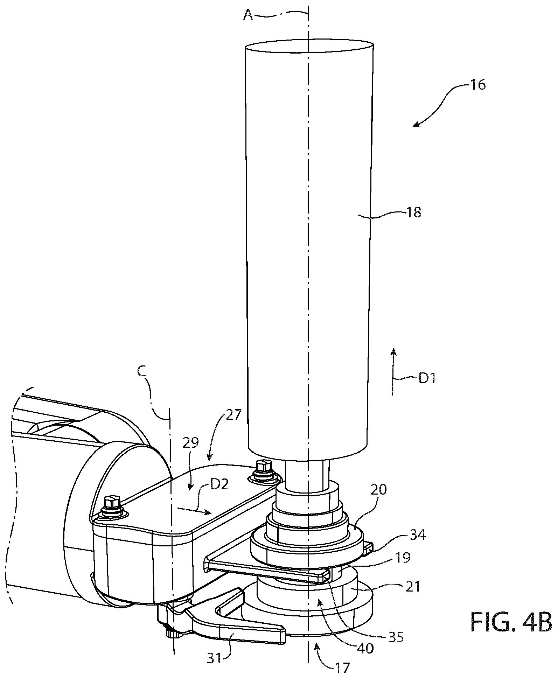

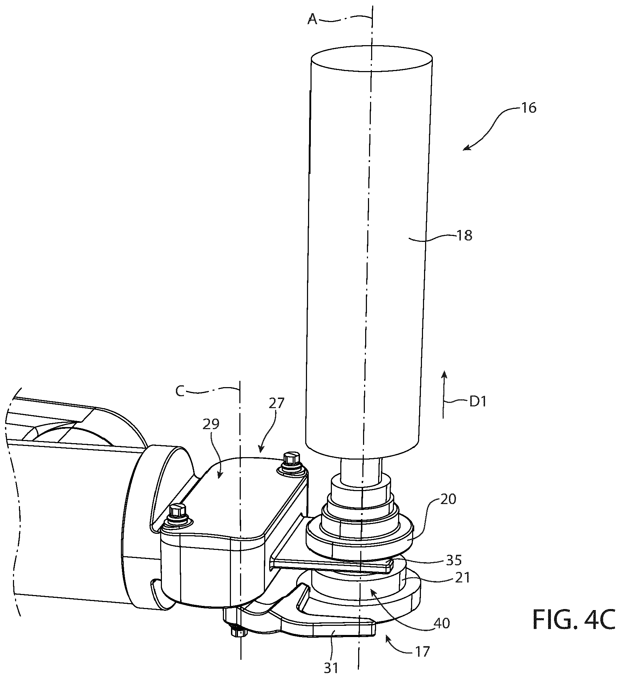

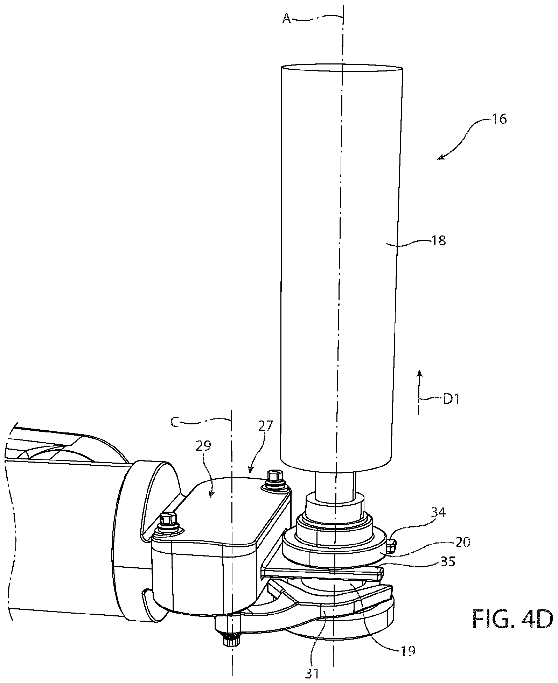

According to some possible non-limiting embodiments, robotic arm may be configured such that fork element 30 may be controllable, in particular by actuation device 28, at least into a first forking position (see Figure 4b), a second forking position (see Figure 4c) and a third forking position (see Figure 4d).

More specifically, actuation device 28 may be configured to move fork element 30 into one of the first forking position, the second forking position and the third forking position by moving end effector 27. Thus, advantageously, by moving fork element 30 into one of the first forking position, the second forking position and the third forking position one also moves clamping element 31, support base 29 and restrain tooth 32.

Preferentially, actuation device 28 may be configured to move fork element 30, in particular by moving end effector 27, so as to control a relative position between fork element 30, and in particular also of clamping element 31 and restrain tooth 32, with respect to capping head 17.

Even more preferentially, actuation device 28 may be configured to move fork element 30 into one of the first forking position, the second forking position and the third forking position so as to execute a series of manipulations on capping head 17 allowing to dismount and/or mount capping head 17. In particular, actuation device 28 may be configured to move fork element 30 into the first forking position, from the first forking position to the second forking position and from the second forking position to the third forking position and backwards.

According to some preferred non-limiting embodiments, fork element 30 may be configured to receive, in use, a portion of tubular body 19 when being controlled in the first forking position such to interpose fork element 30 between first annular portion 20 and second annular portion 21. In other words, with fork element 30 being controlled into the first forking position, tubular body 19 is at least partially inserted into fork element 30.

In particular, with fork element 30 being in the first forking position, fork element 30 may be arranged axially below first annular portion 20, and in particular axially above second annular portion 21.

In further detail, fork element 30 may be controllable into a resting position at which fork element 30 is distanced and/or detached from capping head 17 (see Figure 4a).

Preferentially, actuation device 28 may be configured to move fork element 30 from the resting position to the first forking position. In particular, actuation device 28 may be configured to move fork element 30 such to insert the portion of tubular body 19 within receiving space 33 and/or to interpose the portion of tubular body 19 between first finger 34 and second finger 35.

Moreover, fork element 30 is moveable from the first forking position into the second forking position, to axially move, in use, first annular portion 20, so as to control capping head 17 into the releasing configuration. In particular, fork element 30 is moveable from the first forking position into the second forking position so as to axially move, in use, first annular portion 20 with respect to, and in particular away from, second annular portion 21, so as to control capping head 17 into the releasing configuration.

More specifically, actuation device 28 may be configured to move fork element 30 from the first forking position to the second forking position. In particular, actuation device 28 may be configured to move fork element 30 into a first direction D1 parallel to central axis A and/or transversal, in particular perpendicular, to axis B.

Additionally, fork element 30 may be moveable from the second forking position to the third forking position such that restrain tooth 32 is fitted against capping head 17, in particular second annular portion 21, by mechanical contact.

In more detail, actuation device 28 may be configured to move fork element 30 from the second forking position to the third forking position.

In particular, actuation device 28 may be configured to move fork element 30, and in particular therewith also clamping element 31 and restrain tooth 32, into a second direction D2, transversal, in particular perpendicular, to first direction D1 and/or central axis A. Moreover, second direction D2 may be substantially parallel to axis B.

Preferentially, actuation device 28 may be configured to move fork element 30 at first into the first forking position, then into the second forking position and afterwards into the third forking position. Actuation device 28 may also move fork element 30 the other way round.

In further detail, clamping element 31 may be configured to contact second annular portion 21, in particular a lateral surface 40 of second annular portion 21.

Moreover, restrain tooth 32 may be configured to mechanically contact a face 41 of second annular portion 21 facing first annular portion 20 and/or transversal to lateral surface 40.

In other words, when fork element 30 has been moved into the third forking position and when clamping element 31 has been moved into the clamping position, one obtains that restrain tooth 32 mechanically contacts face 41 and clamping element 31 contacts lateral surface 40.

According to some preferred non-limiting embodiments, once fork element 30 has been moved into the third forking position and when clamping element 31 has been moved into the clamping position, capping head 17 is securely retained by end effector 27 and can be moved together with end effector 27 by operation of actuation device 28.

In particular, once fork element 30 has been moved into the third forking position and when clamping element 31 has been moved into the clamping position it is possible to remove capping head 17 from the base.

In order to newly release capping head 17 from end effector 27, clamping element 31 may be configured to newly move into the rest position and actuation device 28 may be configured to move forking element 30 from the third forking position to the second forking position, then from the second forking position to the first forking position and finally from the first forking position to the resting position.

It should be noted that analogously to dismounting capping head 17 from the respective base, one may also mount a new capping head 17 to the respective base.

According to some preferred non-limiting embodiments, packaging apparatus 1 may be controllable into an operative configuration during which packaging apparatus 1 may package the pourable product into containers 2 and may apply and fasten the caps onto the respective containers 2.

Additionally, packaging apparatus 1 may also be controllable into a modification configuration during which robot 6 may be configured to dismount one or more capping heads 17 from capping machine 9 and to mount one or more new capping heads 17 into capping machine 9.

As mentioned above, in the case of the need of replacing a defective capping head 17, robot 6 may be configured to dismount the defective capping head 17 and to mount a new capping head 17 corresponding to the same type and/or format of capping head 17, while packaging apparatus 1 is controlled into the modification configuration. In this case the new capping head and the dismounted capping head are both of the same first type of capping head.

On the other hand, in the case of a format change, and while packaging apparatus 1 may be controlled into the modification configuration, robot 6 may be configured to dismount one or more capping heads 17 of a first type from capping machine 9 and to mount one or more new capping heads 17 of a second type into capping machine 9.

According to some preferred non-limiting embodiments, packaging apparatus 1 may also comprise a box 42 for containing one or more capping heads 17.

In particular, box 42 contains an inner space 43.

Advantageously, box 42 may be configured to act as an airlock.

In particular, box 42 may be configured such to (selectively) communicate with (i.e. to be in fluidic connection with) external non-aseptic environment 5 and with aseptic environment 4. In other words, box 42 is configured such that inner space 43 may be selectively controlled into fluidic communication with external non-aseptic environment 5 and with aseptic environment 4.

Preferentially, box 42 may also comprise separation elements for selectively controlling (i.e. opening or closing) a fluidic communication between inner space 43 and external non-aseptic environment 5 and between inner space 43 and aseptic environment 4. In particular, the separation elements may be configured such to avoid any fluidic communication between external non-aseptic environment 5 and with aseptic environment 4 through inner space 43.

Preferentially, box 42 may comprise and/or may be connected to sterilization means for sterilizing inner space 43.

According to some preferred non-limiting embodiments, box 42 may be configured such that a user and/or a robotic device may operate in external non-aseptic environment 5 for placing into box 42, in particular into inner space 43, new capping heads 17 and/or for taking out capping heads 17 dismounted from capping machine 9 and placed into box 42, in particular inner space 43.

Additionally, robot 6 may operate in aseptic environment 4 for dismounting capping heads 17, in particular from the respective bases, and placing into box 42 the dismounted capping heads 17 and/or for taking out the new capping heads 17 from box 42.

Preferentially, box 42 is configured for containing simultaneously the dismounted capping heads 17 and the new capping heads 17.

According to some preferred non-limiting embodiments, capping heads 17 may be placed into one or more closed transport boxes, which, in use, are placed into box 42, in particular inner space 43.

Alternatively or in addition, the one or more transport boxes could be placed within isolation housing 3 prior to sterilizing packaging apparatus 1 and prior to obtaining aseptic environment 4 (i.e. prior to a sterilization-in-place cycle).

According to one possible non-limiting embodiment, packaging apparatus 1 may not comprise box 42 and the one or more transport boxes may be placed within isolation housing 3 prior to sterilizing packaging apparatus 1 and prior to obtaining aseptic environment 4 (i.e. prior to a sterilization-in-place cycle).

In particular, each transport box may contain sterilized capping heads 17. In this manner, it is necessary to only sterilize each transport box ones they have been placed within box 42 or within isolation housing 3; i.e. the transport box(es) become(s) sterilized during a sterilization-in-place cycle.

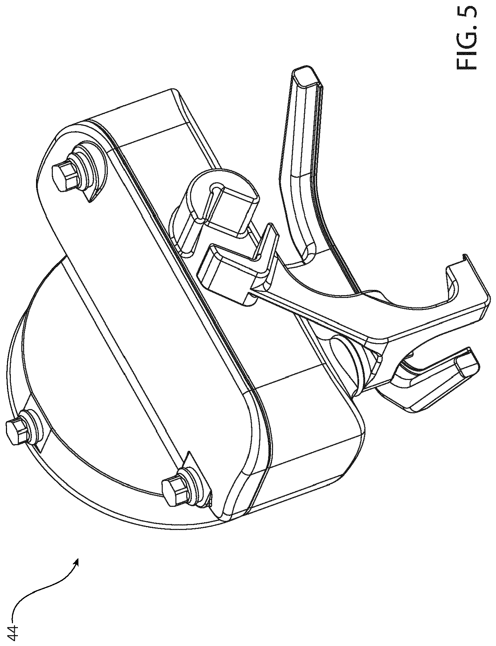

With particular reference to Figure 5, end effector 27 may be replaceable with a second end effector 44, second end effector 44 being configured for enabling robot 6 to manipulate, within aseptic environment 4, a first swab, and/or a first fluid filtering or sampling device, and/or a first sampling dish.

In particular, the first swab and/or the first fluid filtering or sampling device and/or the first sampling dish are configured to be applied for test procedures for assessing the sterility of aseptic environment 4 and/or process fluids used during operation of packaging apparatus 1.

Preferentially, packaging apparatus 1 may also comprise a chamber 45, in particular having an inner space 46, for containing at least:
- the first swab and/or a second swab; and/or
- the first fluid filtering or sampling device and/or a second fluid filtering or sampling device; and/or
- the first sampling dish and/or a second sampling dish.

Advantageously, chamber 45 may act as an airlock.

In particular, chamber 45 may be configured so that chamber 45 may be brought into, in particular may be selectively brought into, fluidic communicating with external non-aseptic environment 5 and with aseptic environment 4, preferentially so that:
- a user can operate in external non-aseptic environment 5 for placing in chamber 45, in particular into inner space 46, the second swab, and/or the second fluid filtering or sampling device, and/or the second sampling dish, and for taking out from chamber 45 the first swab, and/or the first fluid filtering or sampling device, and/or the first sampling dish; and
- robot 6, in particular when being equipped with second end effector 44 may be configured to operate in aseptic environment 4 for placing in chamber 45, in particular inner space 46, the first swab and/or the first fluid filtering or sampling device and/or the first sampling dish, and for taking out from chamber 45, in particular inner space 46, the second swab and/or the second fluid filtering or sampling device and/or the second sampling dish.

With particular reference to Figure 2, actuation device 28 may comprise:
- a wrist portion 50 carrying end effector unit 27 or end effector unit 44,
- in particular, a forearm portion 51 connected to wrist portion 50;
- in particular, an elbow portion 52 connected to forearm portion 51;
- in particular, a biceps portion 53 connected to elbow portion 52; and
- in particular, a shoulder portion 54 connected to biceps portion 53.

Moreover, base platform 26 may be connected to shoulder portion 54.

Preferentially, forearm portion 51 and wrist portion 50 and/or forearm portion 51 and elbow portion 52 and/or elbow portion 52 and biceps portion 53 and/or biceps portion 53 and shoulder portion 54 and/or shoulder portion 54 and base platform 26 may be moveable, in particular angularly moveable, with respect to one another, in particular for allowing actuation device 28 to control movement of end effector 27 or second end effector 44 within aseptic environment 4.

With particular reference to Figure 2, robot 6 may be as a hole moveably arranged within aseptic environment 4; i.e. robot 6 as a hole may move to varying locations within aseptic environment 4.

E.g. robot 6 may be moveable so as to reach the varying capping units 16 of capping machine 9 and/or to reach box 42 and/or to reach chamber 45.

Alternatively, robot 6 may be arranged at a fixed position, in particular adjacent to capping machine 9, and in particular box 43.

According to such an embodiment, packaging apparatus 1 may comprise a second robot 6' substantially identical to robot 6 arranged adjacent to chamber 45. Second robot 6' e.g. be equipped with second end effector 44.

In the case of robot 6 being arranged at a fixed location, while packaging apparatus 1 may be controlled in the modification configuration, capping machine 9 and/or the conveying device associated or comprised by capping machine 9 may move capping units 16 such that robot 6 can reach the desired capping units 16 for dismounting and/or mounting the desired capping heads 17.

According to the preferred non-limiting embodiment shown in Figure 2, packaging apparatus 1 may comprise a planar motor 60, in particular located in external non-aseptic environment 5, and a magnetic mover 61 carrying robot 6.

In more detail, planar motor 60 may be configured so as to move robot 6 within aseptic environment 4 by interacting with mover 61.

E.g. planar motor 60 may be configured to move robot 6 by interaction with mover 61 to varying areas of aseptic environment 4 e.g. so as to access box 42 or chamber 45 or to access different capping units 16.

Preferentially, a shape of planar motor 60 may define the locations, which are reachable by mover 61 and, accordingly, robot 6.

In further detail, base platform 26 may be mounted onto mover 61.

In use, packaging apparatus 1 packages the pourable product into containers 2, in particular when being controlled into the operative configuration.

In more detail, filling machine 8 fills containers 2 with the pourable product, in particular while advancing along filling portion PI, and capping machine 9 applies and fastens respective caps onto containers 2, in particular while packaging apparatus 1 is controlled into the operative configuration.

In the case of a malfunction of one or more capping heads 17 and/or in the case of a format change, it may become necessary to exchange the capping heads 17 in use with new capping heads 17. Therefore, in use, packaging apparatus 1 may be controlled into the modification configuration.

In order to exchange capping heads 17, robot 6 is operated and executes a dismounting step and/or a mounting step.

In more detail, during the dismounting step, at first fork element 30 moves, in particular by means of actuation device 28, to the first forking position such that fork element 30 receives the portion of the respective tubular body 19 and is interposed between the respective first annular portion 20 and the respective second annular portion 21.

Afterwards, fork element 30 moves from the first forking position to the second forking position, in particular by means of actuation device 28, so as to axially move the respective first annular portion 20, in particular into the unlocking position, for controlling the respective capping head 17 into the releasing configuration.

Then, it is possible that fork element 30 moves from the second forking position to the third forking position such that restrain tooth 32 mechanically fits to the portion of capping head 17, in particular at least the respective second annular portion 21, even more particular face 41.

Moreover, clamping element 31 is moved into the clamping position.

Then, it is possible to move end effector 27, in particular by actuation of actuation device 28, so as to detach the capping head 17 in use from the respective base 18. Afterwards, it is possible to place the dismounted capping head 17, e.g. within box 42, in particular inner space 43.

In order to release capping head 17 from end effector 27 clamping element 31 moves into the rest position and fork element 30 moves from the third forking position to the second forking position, from the second forking position to the first forking position and from the first forking position to the resting position.

When executing the mounting step, end effector 27 needs to engage the new capping head 17 and to releasably couple it to a respective base 18.

Therefore, fork element 30 moves from the resting position to the first forking position so as to receive the portion of the respective tubular body 19 of the respective new capping head 17. Then fork element 30 moves into the second forking position followed by moving into the third forking position. Moreover, clamping element 31 moves into the clamping position.

Then, the new capping head 17 can be securely moved to the respective base 18, in particular being possible as the new capping head 17 is controlled into the releasing configuration, which also allows the mounting of the capping head 17. Then, clamping element 31 moves into the rest position and fork element 30 moves back into the second forking position, then the first forking position and finally into the resting position.

Afterwards, it is possible to repeat the same procedure.

According to some possible non-limiting embodiments, it may be possible to move the capping units 16 to a location reachable by robot 6 so as to exchange the respective capping heads 17 of more than one capping unit 16.

Alternatively, in order to exchange capping heads 17 of capping units 16, robot 6 may be moved, by means of the interaction between planar motor 60 and mover 61, to varying locations at which robot 6 can reach one or more capping units 16.

The advantages of robotic arm 25 and/or robot 6 and/or packaging apparatus 1 will be clear from the foregoing description.

In particular, robotic arm 25 allows to exchange capping head 17 without requiring the access of a technical operator. This allows to maintain the sterility within aseptic environment 4.

A further advantage resides that robotic arm 25 allows to operate within aseptic environment 4 without communication to external non-aseptic environment 5.

Another advantage resides in that after exchange of one or more capping heads 17 no sterilization cycle needs to be activated thereby saving time and/or chemicals and/or energy.

Clearly, changes may be made to robotic arm 25 and/or robot 6 and/or packaging apparatus 1 as described herein without, however, departing from the scope of protection as defined in the accompanying claims.

## Claims

1. Robotic arm (25) for manipulating a capping head (17), the capping head (17) comprising a tubular body (19), a first annular portion (20) which is slidable along the tubular body (19), and a second annular portion (21) axially displaced from the first annular portion (20), and in particular the second annular portion (21) being radially wider than the tubular body (19);
wherein the robotic arm (25) comprises an end effector (27), which in turn comprises:
- a support base (29);
- a fork element (30) carried by and protruding from the support base (29);
- a clamping element (31), in particular located below the support base (29); and
- a restrain tooth (32) supported by the support base (29) and being arranged between the fork element (30) and the clamping element (31);
wherein:
- the fork element (30) is configured to receive at least a portion of the tubular body (19) such to be interposed between the first annular portion (20) and the second annular portion (21) and to interact with the first annular portion (20) so as to axially move the first annular portion (20) away from the second annular portion (21) so as to control the capping head (17) into a releasing configuration for allowing to dismount and/or mount the capping head (17);
- wherein the restrain tooth (32) is configured to be fitted against a portion of the capping head, in particular the second annular portion (21), by mechanical contact; and
- the clamping element (31) is moveable into a clamping position in which the clamping element (31) is configured to clamp the capping head (17) in collaboration with the fork element (30) and/or the restrain tooth (32).

2. Robotic arm according to claim 1, wherein the fork element (30) is controllable at least into a first forking position, a second forking position and a third forking position;
wherein the fork element (30) is configured to receive a portion of the tubular body (19) when being controlled in the first forking position and such that the fork element (30) is interposed between the first annular portion (20) and the second annular portion (21);
wherein the fork element (30) is moveable from the first forking position into the second forking position so as to axially move the first annular portion (20) with respect to the second annular portion (21), so as to control the capping head (17) into the releasing configuration;
wherein the fork element (30) is moveable from the second forking position to the third forking position such that the restrain tooth (32) is fitted against the capping head (17), in particular the second annular portion (20), by mechanical contact;
wherein the clamping element (31) is configured to move into the clamping position when the fork element (30) is in the third forking position.

3. Robotic arm according to claim 2, further comprising an actuation device (28) configured to move the fork element (30) into one of the first forking position, the second forking position and the third forking position.

4. Robotic arm according to any one of the preceding claims, wherein the clamping element (31) is rotatably connected to the support base (29);
wherein the clamping element (31) is angularly moveable between a rest position and the clamp position.

5. Robot (6) configured for operating in an aseptic environment (4) of a packaging apparatus (1), the robot (6) comprising a robotic arm (25) according to any of the previous claims.

6. Packaging apparatus (1) for packaging a pourable product into containers, comprising:
- an aseptic environment (4);
- a capping machine (9) located in said aseptic environment (4), the capping machine (9) comprising one or more capping units (16), each having at least one capping head (17) for capping said containers; and
- a robot (6) according to Claim 5 and being placed within the aseptic environment (4).

7. Packaging apparatus according to claim 6, wherein the packaging apparatus (1) is controllable into a modification configuration;
wherein, with the packaging apparatus (1) being controlled into the modification configuration, the robot (6) is configured to dismount one or more capping heads (17) of a first type from the capping machine (9) and to mount one or more new capping heads (17) of a second type into the capping machine (9).

8. Packaging apparatus according to claim 7, wherein, with the packaging apparatus (1) being controlled into the modification configuration, the robot (6) is configured to dismount one or more capping heads of the first type (17) from the capping machine (9) and/or to mount one or more new capping heads (17) of the same first type into the capping machine (9) when the packaging apparatus (1) is controlled into the modification configuration.

9. Packaging apparatus according to any one of claims 6 to 8, comprising an isolation housing (3) delimiting said aseptic environment (4) and defining an external non-aseptic environment (5).

10. Packaging apparatus according to Claim 9, comprising a box (42) for containing one or more capping heads (17);
wherein the packaging apparatus (1) is configured so that the box (42) can communicate with said external non-aseptic environment (5) and with said aseptic environment (4) .

11. Packaging apparatus according to claim 7 or 8 and claim 10 wherein:
- the box (42) is configured such that a user and/or a robotic device can operate in the external non-aseptic environment (5) for placing into the box (42) new capping heads (17) and/or for taking out the capping heads (17) dismounted from the capping machine (9) and placed into the box (42); and
- the robot (6) is configured to operate in the aseptic environment (4) for dismounting and placing into the box (42) the one or more capping heads (17) and/or for taking out the one or more new capping heads (17) from the box (42).

12. Packaging apparatus according to Claim 11, wherein the box (42) is configured for containing simultaneously one or more dismounted capping heads (17) and the new capping heads (17).

13. Packaging apparatus according to any of Claims 6 to 12, wherein the end effector (27) is replaceable with a second end effector (44), the second end effector (44) being configured for enabling the robot (6) to manipulate, within the aseptic environment (4), a first swab and/or a first fluid filtering or sampling device and/or a first sampling dish.

14. Packaging apparatus according to claim 13 and any one of claims 10 to 12, comprising a chamber (45) for containing at least:
- said first swab and/or a second swab; and/or
- said first fluid filtering or sampling device and/or a second fluid filtering or sampling device; and/or
- said first sampling dish and/or a second sampling dish;
the packaging apparatus (1) being configured so that the chamber (45) can communicate with said external non-aseptic environment (5) and with said aseptic environment (4), so that:
- a user or a robotic device can operate in the external non-aseptic environment (5) for placing in the chamber (45) said second swab, and/or said second fluid filtering or sampling device, and or said second sampling dish, and for taking out from the chamber (45) said first swab, and/or said first fluid filtering or sampling device, and/or said first sampling dish;
- the robot (6) is configured to operate in the aseptic environment (4) for placing in the chamber (45) said first swab, and/or said first fluid filtering or sampling device, and/or said first sampling dish, and for taking out from the chamber (45) said second swab, and/or said second fluid filtering or sampling device, and/or said second sampling dish.

15. Packaging apparatus according to any of claims 6 to 14, comprising a planar motor (60), in particular located in an external non-aseptic environment (5), and a magnetic mover (61) carrying said robot (6), in particular within said aseptic environment (4);
the packaging apparatus (1) being configured so that the planar motor (60) can move the robot (6) within the aseptic environment (4), by interacting with the mover (61) .

16. Packaging apparatus according to any of Claims from 6 to 15, comprising a filling machine (8) for filling the containers with the pourable product, the filling machine (8) being located within the aseptic environment (4) .
